# EUROPÄISCHE PATENTANMELDUNG

(11) **EP 1 186 575 A2**
(43) Veröffentlichungstag der Anmeldung: **13.03.2002**
(21) Anmeldenummer: 01111730.6
(22) Anmeldetag: 15.05.2001
(51) Int. Cl.: C03B 5/225

(54) **Unterdruck-Läuteraggregat für eine Glasschmelze**

(30) Priorität: 09.09.2000 DE 10044598
(71) Anmelder: Schott Glas, 55122 Mainz (DE); CARL-ZEISS-STIFTUNG trading as SCHOTT GLAS, 55122 Mainz (DE)
(72) Erfinder: Wilke, Thorsten, Dr., 55118 Mainz (DE); Däubner, Manfred, 65203 Wiesbaden (DE); Eichholz, Rainer, 55122 Mainz (DE)
(74) Vertreter: Fleck, Hermann-Josef, Dr.-Ing.

(57) **Zusammenfassung**

Die Erfindung betrifft ein Unterdruck-Läuteraggregat, bei dem mittels einer über eine Saugleitung angeschlossenen Vakuumpumpe ein Unterdruck über der zu läuternden Glasschmelze erzeugt wird und bei dem an der Saugleitung ein Ventil zum Zuführen von Falschluft aus der Atmosphäre abzweigt, um die Druckverhältnisse im Unterdruckaggregat konstant zu halten. Die Läuterung wird dadurch verbessert, dass der Unterdruckkreis mit einem regelbaren Leck versehen wird, das einen Zufluss von Falschluft in Abhängigkeit von verschiedenen Messgrößen regelt und so konstante Läuterungsverhältnisse schafft.

## Beschreibung

Die Erfindung betrifft ein Unterdruck-Läuteraggregat bei dem mittels einer über eine Saugleitung angeschlossenen Vakuumpumpe ein Unterdruck über der zu läuternden Glasschmelze erzeugt wird und bei dem an der Saugleitung ein Ventil zum Zuführen von Falschluft aus der Atmosphäre abzweigt, um die Druckverhältnisse im Unterdruckaggregat konstant zu halten.

Die Läuterung der Glasschmelze, d.h. die Entfernung von Gasblasen aus der Glasschmelze, dient dazu, Blasenfreiheit zu erzielen. Das Aufsteigen der Gasblasen aus der Glasschmelze ist bei kleinen Tiegelschmelzen schon durch Anlegen eines Unterdruckes über der Glasschmelze beschleunigt worden.

Wie die EP 0 989 099 A1 zeigt, ist ein Unterdruck-Läuteraggregat der eingangs erwähnten Art bekannt, bei dem die Vakuumpumpe und das an der Saugleitung abzweigende Ventil über eine Regelschaltung miteinander verbunden sind. Dabei wird über das Ventil ein Sollwert für den Unterdruck vorgegeben und die Regelschaltung regelt den Betriebsunterdruck der Vakuumpumpe so ein, dass im Unterdruck-Aggregat ein dem vorgegebenen oder vorgebbaren Sollwert entsprechender Unterdruck eingehalten wird.

Diese Art der Regelung des Unterdruckes im Unterdruck-Läuteraggregat hat den Nachteil, dass auftretende Zusatzleckagen des Unterdruck-Aggregates und des zugeordneten Leitungssystems nicht ausgeregelt werden, so dass die Regelung mehr oder weniger genau ist und zu keiner optimalen Läuterung der Glasschmelze führt. Zudem kommt hinzu, dass die Vakuumpumpe größere Reaktionszeiten aufweist, was zu einem Regelvorgang mit hohen Ansprechzeigen führt.

Es ist Aufgabe der Erfindung, ein Unterdruck-Läuteraggregat zu schaffen, bei dem die im Unterdruck-Läuteraggregat und seinem Leitungssystem auftretenden Zusatzleckagen mit ausgeregelt werden und der Regelvorgang kleine Regelzeitkonstanten aufweist.

Diese Aufgabe wird nach der Erfindung in gleich guter Weise dadurch gelöst, dass mittels eines Drucksensors der Absolutdruck im Unterdruck-Aggregat erfassbar ist, dass die Vakuumpumpe mit einem, den maximalen Absolutdruck übersteigenden Betriebsunterdruck betrieben ist, und dass in Abhängigkeit vom erfassten Absolutdruck im Unterdruck-Aggregat und einem vorgegebenen oder vorgebbaren Sollwert für den Absolutdruck das als Regelventil ausgebildete, an der Saugleitung abzweigende Ventil den Absolutdruck im Unterdruck-Aggregat durch entsprechende Zufuhr von Falschluft auf den vorgegebenen oder vorgebbaren Sollwert einregelt ist oder dadurch, dass mittels eines Drucksensors der Differenzdruck zwischen dem Absolutdruck im Unterdruck-Aggregat und dem Druck in der Atmosphäre erfassbar ist, dass die Vakuumpumpe mit einem den maximalen Differenzdruck übersteigenden Betriebsunterdruck betrieben ist, und dass in Abhängigkeit vom erfassten Differenzdruck und einem vorgegebenen oder vorgebbaren Sollwert für den Differenzdruck das als Regelventil ausgebildete, an der Saugleitung abzweigende Ventil den Differenzdruck durch entsprechende Zufuhr von Falschluft auf den vorgegebenen oder vorgebbaren Sollwert einregelt, sowie dadurch, dass mittels eines Glasstandsensors der Glasstand im Unterdruck-Aggregat erfassbar ist, dass die Vakuumpumpe mit einem, dem maximalen Glasstand zugeordneten Betriebsunterdruck betrieben ist, und dass in Abhängigkeit vom erfassten Glasstand und einem vorgegebenen oder vorgebbaren Sollwert für den Glasstand das als Regelventil ausgebildete, an der Saugleitung abzweigende Ventil den Glasstand durch entsprechende Zufuhr von Falschluft auf den vorgegebenen oder vorgebbaren Sollwert einregelt.

In jedem Fall ist die Vakuumpumpe so betrieben, dass der Unterdruck für den maximalen Betrieb ausreicht. Die Vakuumpumpe wird nicht mehr geregelt und hat stets dieselben Betriebsbedingungen. Der Regelvorgang wird durch das reaktionschnellere Regelventil ausgeführt. Bei der Regelung des Glasstandes im Unterdruck-Aggregat führt der variierende Druck infolge des hydrostatischen Drucks zu einem sich ändernden Glasstand, so dass auch hier konstante Läuterungsbedingungen erreicht werden.

Die Ableitung eines Regelsignals für das Regelventil wird nach einer Ausgestaltung dadurch erleichtert, dass der erfasste Absolutdruck, Differenzdruck oder Glasstand einem Messumformer zuführbar ist, dessen elektrisches Ausgangssignal als Regelsignal einem elektrischen Regler des Regelventils weitergeleitet ist.

Nach einer Weiterbildung der Erfindung kann das erfindungsgemäße Unterdruck-Läuteraggregat auch in Verbindung mit einer chemischen oder physikalischen Läuterung eingesetzt werden, um die Läuterwirkung noch weiter zu verbessern.

Die Erfindung wird anhand von in den Zeichnungen dargestellten Ausführungsbeispielen näher erläutert. Es zeigen:
- Fig. 1: ein Prinzipschaltbild eines Unterdruck-Aggregates mit Regelung des Absolutdruckes im Unterdruck-Aggregat,
- Fig. 2: ein Prinzipschaltbild eines Unterdruck-Aggregates mit Regelung des Differenzdruckes zwischen dem Absolutdruck im Unterdruck-Aggregat und dem Druck in der äußeren Atmosphäre und
- Fig. 3: ein Prinzipschaltbild eines Unterdruck-Aggregates mit Regelung des Glasstandes im Unterdruck-Aggregat.

Allen Ausführungsbeispielen ist gemeinsam, dass eine Vakuumpumpe 20 über der Glasschmelze in einem Unterdruck-Aggregat 10 einen Unterdruck erzeugt, und dass die Vakuumpumpe 20 einen fest vorgegebenen Betriebszustand aufweist, der dem maximalen Sollwert einer Regeleinrichtung zugeordnet ist.

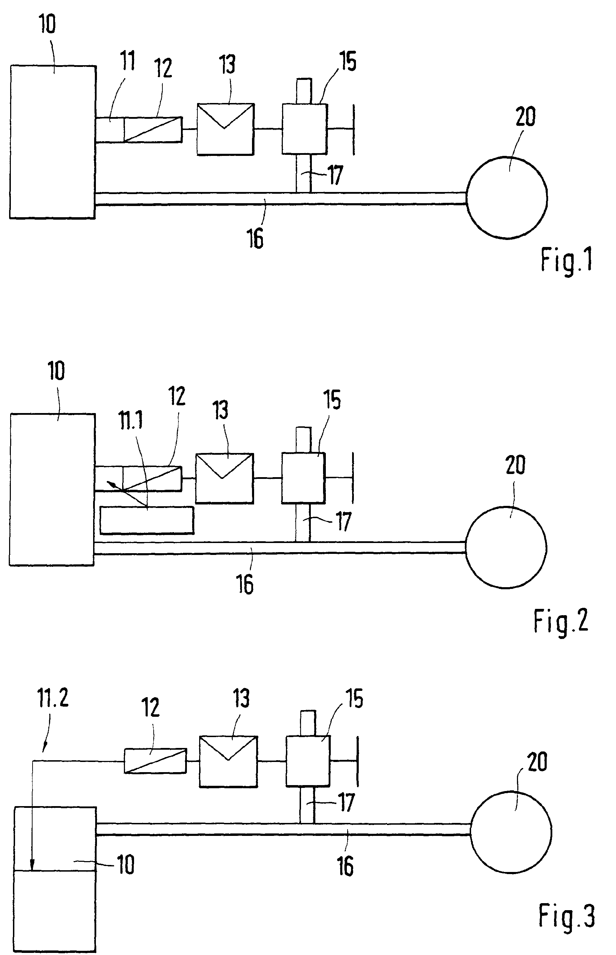

Bei der Absolutdruck-Regelung nach Fig. 1 überwacht ein Drucksensor 11 den Absolutdruck im Unterdruck-Aggregat 10. Das Ausgangssignal des Drucksensors 11 wird über einen Messumformer 12 in ein elektrisches Messwert-Signal umgewandelt und einem elektrischen Regler 13 einer Regeleinrichtung zugeführt. Dieser Regler 13 steuert z.B. ein Regelventil 15, über das mehr oder weniger Falschluft in den Unterdruckkreis gelangen kann. Regler 13 und Regelventil 15 bilden ein regelbares Leck des Unterdruckkreises. Dabei kann am Regler 13 ein Sollwert für den gewünschten Absolutdruck im Unterdruck-Aggregat 10 fest vorgegeben werden. Mit steigendem Absolutdruck, d.h. auch Sollwert, wird das regelbare Leck mehr und mehr verkleinert. Bei maximalem Sollwert kann das Regelventil 15 den Zufluss von Falschluft sperren, so dass allein die Vakuumpumpe 20 den Absolutdruck im Unterdruck-Aggregat 10 bestimmt.

Bei der Differenzdruck-Regelung nach Fig. 2 wird in Abwandlung zum Ausführungsbeispiel nach Fig. 1 lediglich ein Drucksensor 11.1 eingesetzt, der den Differenzdruck zwischen dem Absolutdruck im Unterdruck-Aggregat 10 und dem Druck der äußeren Atmosphäre erfasst und über den Messumformer 12 ein dem erfassten Differenzdruck entsprechendes, elektrisches Messwert-Signal an den Regler 13 weiterleitet, über den ein Sollwert für den Differenzdruck vorgegeben wird. Das Regelventil 15 wird den Zufluss der Falschluft in den Unterdruckkreis entsprechend regeln, so dass der vorgegebene Sollwert erreicht wird.

Schließlich wird im Ausführungsbeispiel nach Fig. 3 ein Glasstand-Sensor 11.2 eingesetzt, der den Glasstand im Unterdruck-Aggregat 10 erfasst und über den Messumformer 12 den Regler 13 mit dem erfassten Messwert-Signal beaufschlagt. Am Regler 13 wird ein Sollwert für den Glasstand vorgegeben und das Regelventil 15 regelt den Zufluss von Falschluft in den Unterdruckkreis so, dass ein dem vorgegebenen Sollwert entsprechender Glasstand im Unterdruck-Aggregat 10 eingeregelt wird. Die Vakuumpumpe 20 arbeitet mit den auf den maximalen Unterdruck abgestimmten Betriebsbedingungen und das regelbare Leck, realisiert durch das Regelventil 15 mit dem Regler 13, übernimmt die Einregelung auf den fest vorgegebenen Sollwert des Glasstandes.

Das Unterdruck-Läuteraggregat nach Fig. 1, 2 oder 3 kann als alleinige Einrichtung zur Läuterung einer Glasschmelze eingesetzt werden. Es kann jedoch auch in Verbindung mit einer chemischen und/oder physikalischen Läuterung verwendet werden.

## Patentansprüche

1. Unterdruck-Läuteraggregat, bei dem mittels einer über eine Saugleitung angeschlossenen Vakuumpumpe ein Unterdruck über der zu läuternden Glasschmelze erzeugt wird und bei dem an der Saugleitung ein Ventil zum Zuführen von Falschluft aus der Atmosphäre abzweigt, um die Druckverhältnisse im Unterdruckaggregat konstant zu halten,
**dadurch gekennzeichnet,**
**dass** mittels eines Drucksensors (11) der Absolutdruck im Unterdruck-Aggregat (10) erfassbar ist,
**dass** die Vakuumpumpe (20) mit einem, den maximalen Absolutdruck übersteigenden Betriebsunterdruck betrieben ist, und
**dass** in Abhängigkeit vom erfassten Absolutdruck im Unterdruck-Aggregat (10) und einem vorgegebenen oder vorgebbaren Sollwert für den Absolutdruck das als Regelventil (15) ausgebildete, an der Saugleitung (16) abzweigende Ventil den Absolutdruck im Unterdruck-Aggregat (10) durch entsprechende Zufuhr von Falschluft auf den vorgegebenen oder vorgebbaren Sollwert einregelt.

2. Unterdruck-Läuteraggregat, bei dem mittels einer über eine Saugleitung angeschlossenen Vakuumpumpe ein Unterdruck über der zu läuternden Glasschmelze erzeugt wird und bei dem an der Saugleitung ein Ventil zum Zuführen von Falschluft aus der Atmosphäre abzweigt, um die Druckverhältnisse im Unterdruck-Läuteraggregat konstant zu halten,
**dadurch gekennzeichnet,**
**dass** mittels eines Drucksensors (11.1) der Differenzdruck zwischen dem Absolutdruck im Unterdruck-Läuterggregat (10) und dem Druck in der Atmosphäre erfassbar ist,
**dass** die Vakuumpumpe (20) mit einem den maximalen Differenzdruck übersteigenden Betriebsunterdruck betrieben ist, und
**dass** in Abhängigkeit vom erfassten Differenzdruck und einem vorgegebenen oder vorgebbaren Sollwert für den Differenzdruck das als Regelventil (15) ausgebildete, an der Saugleitung (16) abzweigende Ventil den Differenzdruck durch entsprechende Zufuhr von Falschluft auf den vorgegebenen oder vorgebbaren Sollwert einregelt.

3. Unterdruck-Läuteraggregat, bei dem mittels einer über eine Saugleitung angeschlossenen Vakuumpumpe ein Unterdruck über der zu läuternden Glasschmelze erzeugt wird und bei dem an der Saugleitung ein Ventil zum Zuführen von Falschluft aus der Atmosphäre abzweigt, um die Druckverhältnisse im Unterdruckaggregat konstant zu halten,
**dadurch gekennzeichnet,**
**dass** mittels eines Glasstandsensors (11.2) der Glasstand im Unterdruck-Läuteraggregat (10) erfassbar ist,
**dass** die Vakuumpumpe (20) mit einem, dem maximalen Glasstand zugeordneten Betriebsunterdruck betrieben ist, und
**dass** in Abhängigkeit vom erfassten Glasstand und einem vorgegebenen oder vorgebbaren Sollwert für den Glasstand das als Regelventil (15) ausgebildete, an der Saugleitung (16) abzweigende Ventil den Glasstand durch entsprechende Zufuhr von Falschluft auf den vorgegebenen oder vorgebbaren Sollwert einregelt.

4. Unterdruck-Läuteraggregat nach Anspruch 1, 2 oder 3,
**dadurch gekennzeichnet,**
**dass** der erfasste Absolutdruck, Differenzdruck oder Glasstand einem Messumformer (12) zuführbar ist, dessen elektrisches Ausgangssignal als Regelsignal einem elektrischen Regler (13) des Regelventils (15) weitergeleitet ist.

5. Unterdruck-Läuteraggregat nach einem der Ansprüche 1 bis 4,
**dadurch gekennzeichnet,**
**dass** es in Verbindung mit einer chemischen Läuterung eingesetzt ist.

6. Unterdruck-Läuteraggregat nach einem der Ansprüche 1 bis 5,
**dadurch gekennzeichnet,**
**dass** es in Verbindung mit einer physikalischen Läuterung eingesetzt ist.
